# FASCICULE DE BREVET EUROPEEN

(11) **EP 0 762 993 B1**
(45) Date de publication et mention de la délivrance du brevet: **19.01.2000**
(21) Numéro de dépôt: 96910065.0
(22) Date de dépôt: 28.03.1996
(51) Int. Cl.: C01B 33/193, C09C 1/30, C08K 3/36

(54) **NOUVEAU PROCEDE DE PREPARATION DE SILICE PRECIPITEE, NOUVELLES SILICES PRECIPITEES CONTENANT DE L'ALUMINIUM ET LEUR UTILISATION AU RENFORCEMENT DES ELASTOMERES**
VERRFAHREN ZUR HERSTELLUNG VON FÄLLUNGSKIESELSÄURE, ALUMINIUM-ENTHALTENDE FÄLLUNGSKIESELSÄUREN UND DEREN VERWENDUNG ZUR VERSTÄRKUNG VON ELASTOMEREN
NOVEL METHOD FOR PREPARING PRECIPITATED SILICA, NOVEL ALUMINIUM-CONTAINING PRECIPITATED SILICAS, AND USE THEREOF FOR REINFORCING ELASTOMERS

(30) Priorité: 29.03.1995 FR 9503674
(43) Date de publication de la demande: 19.03.1997
(73) Titulaire: RHODIA CHIMIE, 92408 Courbevoie Cédex (FR)
(72) Inventeur: BOMAL, Yves, F-75018 Paris (FR); CHEVALLIER, Yvonick, F-69270 Fontaines-Saint-Martin (FR); COCHET, Philippe, F-69009 Lyon (FR)
(74) Mandataire: Delenne, Marc
(86) Numéro de dépôt international: FR9600464
(87) Numéro de publication internationale: WO9630304

(56) Documents cités:
- EP-A- 0 520 862
- FR-A- 2 303 763
- US-A- 3 967 563
- US-A- 4 040 858

## Description

La présente invention concerne un nouveau procédé de préparation de silice précipitée, des silices précipitées se présentant en particulier sous forme de poudre, de billes sensiblement sphériques ou de granulés, et leur application comme charge renforçante pour les élastomères.

On sait que la silice précipitée est utilisée depuis longtemps comme charge blanche renforçante dans les élastomères.

Cependant, comme toute charge renforçante, il convient qu'elle puisse se manipuler d'une part, et surtout s'incorporer d'autre part, facilement dans les mélanges.

On sait, d'une manière générale, que pour obtenir les propriétés de renforcement optimales conférées par une charge, il convient que cette dernière soit présente dans la matrice élastomère sous une forme finale qui soit à la fois la plus finement divisée possible et répartie de la façon la plus homogène possible. Or, de telles conditions ne peuvent être réalisées que dans la mesure où, d'une part, la charge présente une très bonne aptitude à s'incorporer dans la matrice lors du mélange avec l'élastomère (incorporabilité de la charge) et à se désagréger ou se désagglomérer sous la forme d'une poudre très fine (désagrégation de la charge), et où, d'autre part, la poudre issue du processus de désagrégation précité peut elle-même, à son tour, se disperser parfaitement et de façon homogène dans l'élastomère (dispersion de la poudre).

De plus, pour des raisons d'affinités réciproques, les particules de silice ont une fâcheuse tendance, dans la matrice élastomère, à s'agglomérer entre elles. Ces interactions silice/silice ont pour conséquence néfaste de limiter les propriétés de renforcement à un niveau sensiblement inférieur à celui qu'il serait théoriquement possible d'atteindre si toutes les interactions silice/élastomère susceptibles d'être créées pendant l'opération de mélange, étaient effectivement obtenues (ce nombre théorique d'interactions silice/élastomère étant, comme cela est bien connu, directement proportionnel à la surface externe, de la silice utilisée).

En outre, de telles interactions silice/silice tendent, à l'état cru, à augmenter la raideur et la consistance des mélanges, rendant ainsi leur mise en oeuvre plus difficile.

Le problème se pose de disposer de charges qui, tout en pouvant avoir une taille relativement élevée, présentent une très bonne aptitude à la dispersion dans les élastomères.

La présente invention a pour but d'obvier aux inconvénients précités et de résoudre le problème sus-mentionné.

Plus précisément, elle a notamment pour but de proposer un nouveau procédé de préparation de silice précipitée ayant, de manière avantageuse, une très bonne aptitude à la dispersion (et à la désagglomération) et des propriétés renforçantes très satisfaisantes, en particulier qui, utilisées à titre de charge renforçante pour élastomères, confère à ces derniers d'excellentes propriétés rhéologiques tout en leur procurant de bonnes propriétés mécaniques.

L'invention concerne également des silices précipitées qui, de préférence, se présentent sous forme de poudre, de billes sensiblement sphériques ou, éventuellement, de granulés, et qui, tout en présentant une taille relativement élevée, ont une excellente aptitude à la dispersion (et à la désagglomération) et des propriétés renforçantes très satisfaisantes.

Elle est relative enfin à l'utilisation desdites silices précipitées comme charges renforçantes pour élastomères.

Dans l'exposé qui suit, la surface spécifique BET est déterminée selon la méthode de BRUNAUER - EMMET - TELLER décrite dans "The journal of the American Chemical Society", Vol. 60, page 309, février 1938 et correspondant à la norme NFT 45007 (novembre 1987).

La surface spécifique CTAB est la surface externe déterminée selon la norme NFT 45007 (novembre 1987) (5.12).

La prise d'huile DOP est déterminée selon la norme NFT 30-022 (mars 1953) en mettant en oeuvre le dioctylphtalate.

La densité de remplissage à l'état tassé (DRT) est mesurée selon la norme NFT-030100.

Le pH est mesuré selon la norme ISO 787/9 (pH d'une suspension à 5 % dans l'eau).

On précise enfin que les volumes poreux donnés sont mesurés par porosimétrie au mercure, les diamètres de pores étant calculés par la relation de WASHBURN avec un angle de contact théta égal à 130° et une tension superficielle gamma égale à 484 Dynes/cm (porosimètre MICROMERITICS 9300).

L'aptitude à la dispersion et à la désagglomération des silices selon l'invention peut être quantifiée au moyen d'un test spécifique de désagglomération.

Le test de désagglomération est réalisé selon le protocole suivant :
la cohésion des agglomérats est appréciée par une mesure granulométrique (par diffraction laser), effectuée sur une suspension de silice préalablement désagglomérée par ultra-sonification ; on mesure ainsi l'aptitude à la désagglomération de la silice (rupture des objets de 0,1 à quelques dizaines de microns). La désagglomération sous ultra-sons est effectuée à l'aide d'un sonificateur VIBRACELL BIOBLOCK (600 W), équipé d'une sonde de diamètre 19 mm. La mesure granulométrique est effectuée par diffraction laser sur un granulomètre SYMPATEC.

On pèse dans un pilulier (hauteur : 6 cm et diamètre : 4 cm) 2 grammes de silice et l'on complète à 50 grammes par ajout d'eau permutée : on réalise ainsi une suspension aqueuse à 4 % de silice qui est homogénéisée pendant 2 minutes par agitation magnétique. On procède ensuite à la désagglomération sous ultra-sons comme suit : la sonde étant immergée sur une longueur de 4 cm, on règle la puissance de sortie de manière à obtenir une déviation de l'aiguille du cadran de puissance indiquant 20 % (ce qui correspond à une énergie dissipée par l'embout de la sonde de 120 Watt/cm²). La désagglomération est effectuée pendant 420 secondes. On réalise ensuite la mesure granulométrique après avoir introduit dans la cuve du granulomètre un volume (exprimé en ml) connu de la suspension homogénéisée.

La valeur du diamètre médian ⌀₅₀ que l'on obtient est d'autant plus faible que la silice présente une aptitude à la désagglomération élevée. On détermine également le rapport (10 x volume de suspension introduite (en ml))/densité optique de la suspension détectée par le granulomètre (cette densité optique est de l'ordre de 20). Ce rapport est indicatif du taux de fines, c'est-à-dire du taux de particules inférieures à 0,1 µm qui ne sont pas détectées par le granulomètre. Ce rapport appelé facteur de désagglomération aux ultra-sons (F_{D}) est d'autant plus élevé que la silice présente une aptitude à la désagglomération élevée.

L'un des objets de l'invention est un procédé de préparation de silice précipitée du type comprenant la réaction d'un silicate avec un agent acidifiant ce par quoi l'on obtient une suspension de silice précipitée, puis la séparation et le séchage de cette suspension, dans lequel on réalise la précipitation de la manière suivante :
(i) on forme un pied de cuve initial comportant un silicate et un électrolyte, la concentration en silicate (exprimée en SiO₂) dans ledit pied de cuve initial étant inférieure à 100 g/l et la concentration en électrolyte dans ledit pied de cuve initial étant inférieure à 17 g/l,
(ii) on ajoute l'agent acidifiant audit pied de cuve jusqu'à l'obtention d'une valeur du pH du milieu réactionnel d'au moins environ 7,
(iii) on ajoute au milieu réactionnel simultanément de l'agent acidifiant et un silicate,
et dans lequel on sèche une suspension présentant un taux de matière sèche d'au plus 24 % en poids,
caractérisé en ce que ledit procédé comprend une des deux opérations (a) ou (b) suivantes :
(a) on ajoute, après l'étape (iii), au milieu réactionnel au moins un composé A de l'aluminium, puis un agent basique, ladite séparation comportant une filtration et un délitage du gâteau issu de cette filtration, ledit délitage étant effectué en présence d'au moins un composé B de l'aluminium,
(b) on ajoute, après l'étape (iii), au milieu réactionnel simultanément un silicate et au moins un composé A de l'aluminium et, lorsque ladite séparation comporte une filtration et un délitage du gâteau issu de cette filtration, le délitage est de préférence effectué en présence d'au moins un composé B de l'aluminium.

Il a été ainsi trouvé que l'introduction d'aluminium, et ce selon une méthode particulière, combinée à une concentration faible en silicate (exprimée en SiO₂) et en électrolyte dans le pied de cuve initial et à un taux approprié de matière sèche de la suspension à sécher constituait une condition importante pour conférer aux produits obtenus leurs très bonnes propriétés, notamment une aptitude à la dispersion remarquable et des propriétés renforçantes très satisfaisantes.

Il est à noter, d'une manière générale, que le procédé concerné est un procédé de synthèse de silice de précipitation, c'est-à-dire que l'on fait agir, dans des conditions très particulières, un agent acidifiant sur un silicate.

Le choix de l'agent acidifiant et du silicate se fait d'une manière bien connue en soi.

On peut rappeler que l'on utilise généralement comme agent acidifiant un acide minéral fort tel que l'acide sulfurique, l'acide nitrique ou l'acide chlorhydrique, ou un acide organique tel que l'acide acétique, l'acide formique ou l'acide carbonique.

L'agent acidifiant peut être dilué ou concentré ; sa normalité peut être comprise entre 0,4 et 36 N, par exemple entre 0,6 et 1,5 N.

En particulier, dans le cas où l'agent acidifiant est l'acide sulfurique, sa concentration peut être comprise entre 40 et 180 g/l, par exemple entre 60 et 130 g/l.

On peut par ailleurs utiliser en tant que silicate toute forme courante de silicates tels que métasilicates, disilicates et avantageusement un silicate de métal alcalin, notamment le silicate de sodium ou de potassium.

Le silicate peut présenter une concentration exprimée en silice comprise entre 40 et 330 g/l, par exemple entre 60 et 300 g/l, en particulier entrte 60 et 250 g/l.

De manière générale, on emploie, comme agent acidifiant, l'acide sulfurique, et, comme silicate, le silicate de sodium.

Dans le cas où l'on utilise le silicate de sodium, celui-ci présente, en général, un rapport pondéral SiO₂/Na₂O compris entre 2 et 4, par exemple entre 3,0 et 3,7.

En ce qui concerne plus particulièrement le procédé de préparation de l'invention, la précipitation se fait d'une manière spécifique selon les étapes suivantes.

On forme tout d'abord un pied de cuve qui comprend du silicate ainsi qu'un électrolyte (étape (i)). La quantité de silicate présente dans le pied de cuve initial ne représente avantageusement qu'une partie de la quantité totale de silicate engagée dans la réaction.

Le terme électrolyte s'entend ici dans son acceptation normale, c'est-à-dire qu'il signifie toute substance ionique ou moléculaire qui, lorsqu'elle est en solution, se décompose ou se dissocie pour former des ions ou des particules chargées. On peut citer comme électrolyte un sel du groupe des sels des métaux alcalins et alcalino-terreux, notamment le sel du métal de silicate de départ et de l'agent acidifiant, par exemple le sulfate de sodium dans le cas de la réaction d'un silicate de sodium avec l'acide sulfurique.

Selon une caractéristique du procédé de préparation selon l'invention, la concentration en électrolyte dans le pied de cuve initial est (supérieure à 0 g/l et) inférieure à 17 g/l, de préférence inférieure à 14 g/l.

Selon une autre caractéristique du procédé de préparation selon l'invention, la concentration en silicate dans le pied de cuve initial est (supérieure à 0 g/l et) inférieure à 100 g de SiO₂ par litre. De préférence, cette concentration est inférieure à 90 g/l, notamment à 85 g/l. Elle peut dans certains cas être inférieure à 80 g/l.

La deuxième étape consiste à ajouter l'agent acidifiant dans le pied de cuve de composition décrite plus haut (étape (ii)).

Cette addition qui entraîne une baisse corrélative du pH du milieu réactionnel se fait jusqu'à ce qu'on atteigne une valeur du pH d'au moins environ 7, généralement comprise entre 7 et 8.

Une fois qu'est atteinte la valeur souhaitée de pH, on procède alors à une addition simultanée (étape (iii)) d'agent acidifiant et de silicate.

Cette addition simultanée est de préférence réalisée de manière telle que la valeur du pH soit constamment égale (à +/- 0,1 près) à celle atteinte à l'issue de l'étape (ii).

Selon une caractéristique essentielle du procédé de préparation selon l'invention, celui-ci comprend une des deux opérations (a) ou (b) mentionnées précédemment, c'est-à-dire :
(a) on ajoute, après l'étape (iii), au milieu réactionnel au moins un composé A de l'aluminium, puis un agent basique, la séparation, mise en oeuvre dans le procédé, comportant une filtration et un délitage du gâteau issu de cette filtration, ledit délitage étant effectué en présence d'au moins un composé B de l'aluminium, ou
(b) on ajoute, après l'étape (iii), au milieu réactionnel simultanément un silicate et au moins un composé A de l'aluminium et, lorsque la séparation, mise en oeuvre dans le procédé, comporte une filtration et un délitage du gâteau issu de cette filtration, le délitage est de préférence effectué en présence d'au moins un composé B de l'aluminium.

Dans une première variante du procédé de préparation selon l'invention (c'est-à-dire lorsque celui-ci comprend l'opération (a)), on effectue avantageusement, après avoir réalisé la précipitation selon les étapes (i), (ii) et (iii) précédemment décrites, les étapes successives suivantes :
(iv) on ajoute au milieu réactionnel (c'est-à-dire à la suspension ou bouillie réactionnelle obtenue) au moins un composé A de l'aluminium,
(v) on ajoute au milieu réactionnel un agent basique, de préférence jusqu'à l'obtention d'une valeur du pH du milieu réactionnel comprise entre 6,5 et 10, en particulier entre 7,2 et 8,6,
(vi) on ajoute au milieu réactionnel de l'agent acidifiant, de préférence jusqu'à l'obtention d'une valeur du pH du milieu réactionnel comprise entre 3 et 5, en particulier entre 3,4 et 4,5.

Il peut être alors avantageux d'effectuer, après l'addition simultanée de l'étape (iii), un mûrissement du milieu réactionnel, ce mûrissement pouvant par exemple durer de 1 à 60 minutes, en particulier de 3 à 30 minutes.

Dans cette première variante, il est souhaitable, entre l'étape (iii) et l'étape (iv), et notamment avant ledit mûrissement éventuel, d'ajouter au milieu réactionnel une quantité supplémentaire d'agent acidifiant. Cette addition se fait généralement jusqu'à l'obtention d'une valeur du pH du milieu réactionnel comprise entre 3 et 6,5, en particulier entre 4 et 6.

L'agent acidifiant utilisé lors de cette addition est généralement identique à celui employé lors des étapes (ii), (iii) et (vi) de la première variante du procédé de préparation selon l'invention.

Un mûrissement du milieu réactionnel est habituellement effectué entre l'étape (v) et l'étape (vi), par exemple pendant 2 à 60 minutes, en particulier pendant 5 à 45 minutes.

De même, un mûrissement du milieu réactionnel est le plus souvent effectué après l'étape (vi), par exemple pendant 2 à 60 minutes, en particulier pendant 5 à 30 minutes.

L'agent basique utilisé lors de l'étape (iv) peut être une solution d'ammoniaque ou, de préférence, une solution d'hydroxyde de sodium (ou soude).

Dans une seconde variante du procédé de préparation selon l'invention (c'est-à-dire lorsque celui-ci comprend l'opération (b)), on effectue, après les étapes (i), (ii) et (iii) précédemment décrites, une étape (iv) qui consiste à ajouter au milieu réactionnel simultanément un silicate et au moins un composé A de l'aluminium.

Il peut être alors avantageux d'effectuer, après l'addition simultanée de l'étape (iv), un mûrissement du milieu réactionnel, ce mûrissement pouvant par exemple durer de 2 à 60 minutes, en particulier de 5 à 30 minutes.

Dans cette seconde variante, il est souhaitable, après l'étape (iv), et notamment après ce mûrissement éventuel, d'ajouter au milieu réactionnel une quantité supplémentaire d'agent acidifiant. Cette addition se fait généralement jusqu'à l'obtention d'une valeur du pH du milieu réactionnel comprise entre 3 et 6,5, en particulier entre 4 et 6.

L'agent acidifiant utilisé lors de cette addition est généralement identique à celui employé lors des étapes (ii) et (iii) de la seconde variante du procédé de préparation selon l'invention.

Un mûrissement du milieu réactionnel est habituellement effectué après cette addition d'agent acidifiant, par exemple pendant 1 à 60 minutes, en particulier pendant 3 à 30 minutes.

Le composé A de l'aluminium employé dans le procédé de préparation selon l'invention est en général un sel organique ou inorganique de l'aluminium.

A titre d'exemples de sel organique, on peut citer notamment les sels d'acides carboxyliques ou polycarboxyliques, comme les sels d'acide acétique, citrique, tartrique ou oxalique.

A titre d'exemples de sel inorganique, on peut citer notamment les halogénures et les oxyhalogénures (comme les chlorures, les oxychlorures), les nitrates, les phosphates, les sulfates et les oxysulfates.

Dans la pratique, le composé A de l'aluminium peut être utilisé sous la forme d'une solution, en général aqueuse.

De préférence, on emploie à titre de composé A de l'aluminium un sulfate d'aluminium.

La température du milieu réactionnel est généralement comprise entre 70 et 98 °C.

Selon une variante de l'invention, la réaction est effectuée à une température constante comprise entre 75 et 96 °C.

Selon une autre variante (préférée) de l'invention, la température de fin de réaction est plus élevée que la température de début de réaction : ainsi, on maintient la température au début de la réaction de préférence entre 70 et 96 °C, puis on augmente la température en quelques minutes, de préférence jusqu'à une valeur comprise entre 80 et 98 °C, valeur à laquelle elle est maintenue jusqu'à la fin de la réaction ; les opérations (a) ou (b) sont ainsi habituellement effectuées à cette valeur constante de température.

On obtient, à l'issue des étapes qui viennent d'être décrites, une bouillie de silice qui est ensuite séparée (séparation liquide-solide).

Dans la première variante du procédé de préparation selon l'invention (c'est-à-dire lorsque celui-ci comprend l'opération (a)), cette séparation comporte une filtration (suivie d'un lavage si nécessaire) et un délitage, ledit délitage étant effectué en présence d'au moins un composé B de l'aluminium et, de préférence, en présence d'un agent acidifiant tel que décrit précédemment (dans ce dernier cas, le composé B de l'aluminium et l'agent acidifiant sont avantageusement ajoutés de manière simultanée).

L'opération de délitage, qui peut être réalisée par exemple par passage du gâteau de filtration dans un broyeur de type colloïdal ou à bille, permet notamment d'abaisser la viscosité de la suspension à sécher ultérieurement.

Dans la seconde variante du procédé de préparation selon l'invention (c'est-à-dire lorsque celui-ci comprend l'opération (b)), la séparation comporte aussi, en général, une filtration (suivie d'un lavage si nécessaire) et un délitage, ledit délitage étant de préférence effectué en présence d'au moins un composé B de l'aluminium et, en général, en présence d'un agent acidifiant tel que décrit précédemment (dans ce dernier cas, le composé B de l'aluminium et l'agent acidifiant sont avantageusement ajoutés de manière simultanée).

Le composé B de l'aluminium est habituellement différent du composé A de l'aluminium mentionné précédemment et consiste, en général, en un aluminate de métal alcalin, notamment de potassium ou, de manière très préférée, de sodium.

De préférence, les quantités de composés A et B de l'aluminium utilisées dans le procédé de préparation selon l'invention sont telles que la silice précipitée préparée contient au moins 0,35 %, en particulier au moins 0,45 %, par exemple entre 0,50 et 1,50 %, voire entre 0,75 et 1,40 %, en poids d'aluminium.

La séparation mise en oeuvre dans le procédé de préparation selon l'invention comprend habituellement une filtration effectuée au moyen de toute méthode convenable, par exemple au moyen d'un filtre à bande, d'un filtre rotatif sous vide ou, de préférence, d'un filtre presse.

La suspension de silice précipitée ainsi récupérée (gâteau de filtration) est ensuite séchée.

Selon une caractéristique du procédé de préparation selon l'invention, cette suspension doit présenter immédiatement avant son séchage un taux de matière sèche d'au plus 24 % en poids, de préférence d'au plus 22 % en poids.

Ce séchage peut se faire selon tout moyen connu en soi.

De préférence, le séchage se fait par atomisation.

A cet effet, on peut utiliser tout type d'atomiseur convenable, notamment un atomiseur à turbines, à buses, à pression liquide ou à deux fluides.

Selon un mode de réalisation de l'invention, la suspension à sécher présente un taux de matière sèche supérieur à 15 % en poids, de préférence supérieur à 17 % en poids et, par exemple, supérieur à 20 % en poids. Le séchage est alors de préférence effectué au moyen d'un atomiseur à buses.

La silice précipitée susceptible d'être obtenue selon ce mode de réalisation de l'invention et de préférence en mettant en oeuvre un filtre presse se présente avantageusement sous forme de billes sensiblement sphériques, de préférence d'une taille moyenne d'au moins 80 µm.

Il est à noter que l'on peut également, après la filtration, à une étape ultérieure du procédé, rajouter au gâteau de filtration de la matière sèche, par exemple de la silice sous forme pulvérulente.

A l'issue du séchage, on peut procéder à une étape de broyage sur le produir récupéré, notamment sur le produit obtenu par séchage de suspension présentant un taux de matière sèche supérieur à 15 % en poids. La silice précipitée qui est alors susceptible d'être obtenue se présente généralement sous forme d'une poudre, de préférence de taille moyenne d'au moins 15 µm, en particulier comprise entre 15 et 60 µm, par exemple entre 20 et 45 µm.

Les produits broyés à la granulométrie désirée peuvent être séparés des éventuels produits non conformes au moyen par exemple de tamis vibreurs présentant des tailles de maille appropriées, et les produits non conformes ainsi récupérés être renvoyés au broyage.

De même, selon un autre mode de réalisation de l'invention, la suspension à sécher présente un taux de matière sèche d'au plus 15 % en poids. Le séchage est alors en général effectué au moyen d'un atomiseur à turbines. La silice précipitée qui est alors susceptible d'être obtenue selon ce mode de réalisation de l'invention et de préférence en mettant en oeuvre un filtre rotatif sous vide se présente généralement sous la forme d'une poudre, de préférence de taille moyenne d'au moins 15 µm, en particulier comprise entre 30 et 150 µm, par exemple entre 45 et 120 µm.

Enfin, le produit séché (notamment à partir d'une suspension ayant un taux de matière sèche d'au plus 15 % en poids) ou broyé peut, selon un autre mode de réalisation de l'invention, être soumis à une étape d'agglomération.

On entend ici par agglomération tout procédé qui permet de lier entre eux des objets finement divisés pour les amener sous la forme d'objets de plus grande taille et résistant mieux mécaniquement.

Ces procédés sont notamment la compression directe, la granulation voie humide (c'est-à-dire avec utilisation d'un liant tel que eau, slurry de silice, ...), l'extrusion et, de préférence, le compactage à sec.

Lorsque l'on met en oeuvre cette dernière technique, il peut s'avérer avantageux, avant de procéder au compactage, de désaérer (opération aussi appelée pré-densification ou dégazage) les produits pulvérulents de manière à éliminer l'air inclus dans ceux-ci et assurer un compactage plus régulier.

La silice précipitée susceptible d'être obtenue selon ce mode de réalisation de l'invention se présente avantageusement sous la forme de granulés, de préférence de taille d'au moins 1 mm, en particulier comprise entre 1 et 10 mm.

A l'issue de l'étape d'agglomération, les produits peuvent être calibrés à une taille désirée, par exemple par tamisage, puis conditionnés pour leur utilisation future.

Les poudres, de même que les billes, de silice précipitée obtenues par le procédé selon l'invention offrent ainsi l'avantage, entre autre, d'accéder de manière simple, efficace et économique à des granulés tels que précités, notamment par des opérations classiques de mise en forme, telles que par exemple une granulation ou un compactage, sans que ces dernières n'entraînent de dégradations susceptibles de masquer, voire annihiler, les bonnes propriétés intrinsèques attachées à ces poudres ou ces billes, comme cela peut être le cas dans l'art antérieur en mettant en oeuvre des poudres classiques.

D'autres objets de l'invention consistent en de nouvelles silices précipitées ayant une excellente aptitude à la dispersion (et à la désagglomération) et des propriétés renforçantes très satisfaisantes, en particulier qui, utilisées à titre de charge renforçante pour élastomères, confère à ces derniers d'excellentes propriétés rhéologiques tout en leur procurant de bonnes propriétés mécaniques.

Ainsi, il est maintenant proposé, selon l'invention, une nouvelle silice précipitée caractérisée en ce qu'elle possède :
- une surface spécifique CTAB comprise entre 140 et 200 m²/g, de préférence entre 145 et 180 m²/g,
- une surface spécifique BET comprise entre 140 et 200 m²/g, de préférence entre 150 et 190 m²/g,
- une prise d'huile DOP inférieure à 300 ml/100g, de préférence comprise entre 200 et 295 ml/100g,
- un diamètre médian (⌀₅₀), après désagglomération aux ultra-sons, inférieur à 3 µm, de préférence inférieur à 2,8 µm, par exemple inférieur à 2,5 µm,
- un facteur de désagglomération aux ultra-sons (F_{D}) supérieur à 10 ml, de préférence supérieur à 11 ml,
- une teneur en aluminium d'au moins 0,35 % en poids, de préférence d'au moins 0,45 % en poids.

Le facteur de désagglomération de la silice selon l'invention est, de manière avantageuse, d'au moins 15 ml ; il peut être par exemple d'au moins 21 ml.

La silice selon l'invention présente, de manière préférée, une teneur en aluminium comprise entre 0,50 et 1,50 % en poids ; cette teneur peut être notamment comprise entre 0,75 et 1,40 % en poids.

Selon un mode particulier de réalisation de l'invention, une des caractéristiques de la silice peut également résider dans la distribution, ou répartition, du volume poreux, et notamment dans la distribution du volume poreux qui est généré par les pores de diamètres inférieurs ou égaux à 400 Å. Ce dernier volume correspond au volume poreux utile des charges qui sont employées dans le renforcement des élastomères. L'analyse des porogrammes montre qu'alors la silice selon un mode particulier de l'invention possède une distribution poreuse telle que le volume poreux constitué par les pores dont le diamètre est compris entre 175 et 275 Å représente au moins 50 %, par exemple au moins 60 %, du volume poreux constitué par les pores de diamètres inférieurs ou égaux à 400 Å.

Selon une variante très préférée de l'invention, la silice possède un rapport surface spécifique BET / surface spécifique CTAB compris entre 1,0 et 1,2, c'est-à-dire qu'elle présente de préférence une faible microporosité.

Le pH de la silice selon l'invention est, en général, compris entre 6,5 et 7,5, par exemple entre 6,7 et 7,3.

Les silices selon l'invention peuvent se présenter sous forme de poudre, de billes sensiblement sphériques ou, éventuellement, de granulés et sont notamment caractérisées par le fait que, tout en ayant une taille relativement élevée, elles présentent une excellente aptitude à la dispersion et à la désagglomération et des propriétés renforçantes très satisfaisantes. Elles présentent ainsi une aptitude à la dispersion et à la désaggglomération avantageusement supérieure, à surface spécifique identique ou proche et à taille identique ou proche, à celle des silices de l'art antérieur.

Les poudres de silice selon l'invention présentent préférentiellement une taille moyenne d'au moins 15 µm ; celle-ci est par exemple comprise entre 15 et 60 µm (notamment entre 20 et 45 µm) ou entre 30 et 150 µm (notamment entre 45 et 120 µm).

Elles possèdent, de manière préférée, une prise d'huile DOP comprise entre 240 et 290 ml/100g.

La densité de remplissage à l'état tassé (DRT) desdites poudres est, en général, d'au moins 0,17, et, par exemple, comprise entre 0,2 et 0,3.

Lesdites poudres présentent généralement un volume poreux total d'au moins 2,5 cm³/g, et, plus particulièrement, compris entre 3 et 5 cm³/g.

Elles permettent notamment d'obtenir un très bon compromis mise en oeuvre/propriétés mécaniques à l'état vulcanisé.

Elles constituent aussi des précurseurs privilégiés pour la synthèse de granulés tels que décrits plus loin.

Les billes sensiblement sphériques selon l'invention présentent préférentiellement une taille moyenne d'au moins 80 µm.

Selon certaines variantes de l'invention, cette taille moyenne des billes est d'au moins 100 µm, par exemple d'au moins 150 µm ; elle est généralement d'au plus 300 µm et se situe de préférence entre 100 et 270 µm. Cette taille moyenne est déterminée selon la norme NF X 11507 (décembre 1970) par tamisage à sec et détermination du diamètre correspondant à un refus cumulé de 50 %.

Elles possèdent, de manière préférée, une prise d'hulie DOP comprise entre 240 et 290 ml/100g.

La densité de remplissage à l'état tassé (DRT) desdites billes (ou perles) est, en général, d'au moins 0,17, et, par exemple, comprise entre 0,2 et 0,34.

Elles présentent habituellement un volume poreux total d'au moins 2,5 cm³/g, et plus particulièrement, compris entre 3 et 5 cm³/g.

Comme indiqué ci-avant, une telle silice sous forme de billes sensiblement sphériques, avantageusement pleines, homogènes, peu poussièrantes et de bonne coulabilité, présente une excellente aptitude à la désagglomération et à la dispersion. En outre, elle présente de bonnes propriétés renforçantes. Une telle silice constitue également un précurseur privilégié pour la synthèse des poudres et des granulés selon l'invention.

Une telle silice sous forme de billes sensiblement sphériques constitue une variante très avantageuse de l'invention.

Les dimensions des granulés selon l'invention sont préférentiellement d'au moins 1 mm, en particulier comprises entre 1 et 10 mm, selon l'axe de leur plus grande dimension (longueur).

Ils possèdent, de manière préférée, une prise d'hulie DOP comprise entre 200 et 260 ml/100g.

Lesdits granulés peuvent se présenter sous des formes les plus diverses. A titre d'exemple, on peut notamment citer les formes sphérique, cylindrique, parallélépipédique, de pastille, de plaquette, de boulette, d'extrudé à section circulaire ou polylobée.

La densité de remplissage à l'état tassé (DRT) desdits granulés est en général d'au moins 0,27 et peut aller jusqu'à 0,37.

Ils présentent généralement un volume poreux total d'au moins 1 cm³/g, et, plus particulièrement, entre 1,5 et 2 cm³/g.

Les silices selon l'invention, notamment sous forme de poudre, de billes sensiblement sphériques ou de granulés, sont de préférence préparées selon l'une des variantes appropriées du procédé de préparation conforme à l'invention et décrit précédemment.

Les silices selon l'invention ou préparées par le procédé selon l'invention trouvent une application particulièrement intéressante dans le renforcement des élastomères, naturels ou synthétiques. Elles confèrent à ces élastomères d'excellentes propriétés rhéologiques tout en leur procurant de bonnes propriétés mécaniques et, en général, une bonne résistance à l'abrasion. De plus, ces élastomères sont alors de préférence sujets à un échauffement réduit.

Les exemples suivants illustrent l'invention sans toutefois en limiter la portée.

### EXEMPLE 1 (comparatif)

Dans un réacteur en acier inoxydable muni d'un système d'agitation par hélices et d'un chauffage par double enveloppe, on introduit:
- 350 litres d'eau
- 7,5 kg de Na₂SO₄
- 580 litres de silicate de sodium aqueux, présentant un rapport pondéral SiO₂/Na₂O égal à 3,45 et une densité à 20 °C égal à 1,133.

La concentration en silicate exprimée en SiO₂ dans le pied de cuve initial est alors de 84 g/l. Le mélange est alors porté à une température de 82 °C tout en le maintenant sous agitation. On y introduit alors 395 litres d'acide sulfurique dilué de densité à 20 °C égale à 1,050 jusqu'à obtenir dans le milieu réactionnel une valeur de pH (mesurée à sa température) égale à 7,5. La température de la réaction est de 82 °C pendant les 25 premières minutes ; elle est ensuite portée de 82 à 94 °C en 15 minutes environ, puis maintenue à 94 °C jusqu'à la fin de la réaction.

On introduit ensuite conjointement dans le milieu réactionnel 75 litres de silicate de sodium aqueux du type décrit ci-avant et 121 litres d'acide sulfurique, également du type décrit ci-avant, cette introduction simultanée d'acide et de silicate étant réalisée de manière telle que le pH du milieu réactionnel, pendant la période d'introduction, soit constamment égal à 7,5 ± 0,1. Après introduction de la totalité de ce silicate, on continue à introduire de l'acide dilué pendant 8 minutes de manière à amener le pH du milieu réactionnel à une valeur égale à 5,2. Après cette introduction d'acide, on maintient la bouillie réactionnelle obtenue pendant 5 minutes sous agitation.

La durée totale de la réaction est de 117 minutes.

On obtient ainsi une bouillie ou suspension de silice précipitée (appelée suspension réactionnelle S) qui est ensuite filtrée et lavée au moyen d'un filtre presse.

Le gâteau obtenu est ensuite fluidifié par action mécanique et chimique (ajout simultané d'acide sulfurique et d'une quantité d'aluminate de sodium correspondant à un rapport pondéral Al/SiO₂ de 0,28 %). Après cette opération de délitage, la bouillie résultante, de pH égal à 6,5 et de perte au feu égale à 79,0 % (donc un taux de matière sèche de 21,0 % en poids), est atomisée au moyen d'un atomiseur à buses.

Les caractéristiques de la silice obtenue A1 sous forme de billes sensiblement sphériques sont alors les suivantes :
- surface spécifique CTAB 155 m²/g
- surface spécifique BET 170 m²/g
- prise d'huile DOP 270 ml/100g
- teneur pondéral en aluminium 0,25 %
- volume poreux V1 représenté par les pores de d ≤ 400 Å 0,99 cm³/g
- volume poreux V2 représenté par les pores 175 Å ≤ d ≤ 275 Å 0,61 cm³/g
- rapport V2/V1 62 %
- pH 7,2
- taille moyenne des particules 250 µm

On soumet la silice A1 au test de désagglomération tel que défini précédemment dans la description.

Après désagglomération aux ultra-sons, elle présente un diamètre médian (⌀₅₀) de 4,0 µm et un facteur de désagglomération aux ultra-sons (F_{D}) de 8 ml.

### EXEMPLE 2 (comparatif)

Dans un réacteur en acier inoxydable muni d'un système d'agitation par hélices et d'un chauffage par double enveloppe, on introduit 1600 litres d'une suspension réactionnelle S telle que préparée à l'exemple 1.

On y introduit ensuite, pendant 6 minutes, à un débit de 4,8 I/mn, une solution de sulfate d'aluminium de densité à 20°C égale à 1,2. A l'issue de cette addition, on introduit dans le milieu réactionnel, à un débit de 3,8 I/mn, de la soude concentrée à 18 %, jusqu'à ce que le pH du milieu réactionnel soit égal à 8,0.

On arrête ensuite l'introduction de soude et on procède à un mûrissement du milieu réactionnel pendant 20 minutes à une température de 94 °C.

Puis on introduit, à un débit de 4,0 I/mn, de l'acide sulfurique du type décrit dans l'exemple 1, jusqu'à ce que le pH du milieu réactionnel soit égal à 4,5.

On arrête ensuite l'introduction d'acide et on procède à un mûrissement du milieu réactionnel pendant 10 minutes à une température de 94 °C.

La durée de la réaction (à partir de l'introduction du sulfate d'aluminium) est de 48 minutes.

On obtient ainsi une bouillie de silice précipitée qui est filtrée et lavée au moyen d'un filtre presse.

Le gâteau obtenu est ensuite fluidifié par simple action mécanique. Après cette opération de délitage, la bouillie résultante, de pH égal à 6,6 et de perte au feu égale à 80,0 % (donc un taux de matière sèche de 20,0 % en poids), est atomisée au moyen d'un atomiseur à buses.

Les caractéristiques de la silice obtenue A2 sous forme de billes sensiblement sphériques sont alors les suivantes :
- surface spécifique CTAB 151 m²/g
- surface spécifique BET 161 m²/g
- prise d'huile DOP 254 ml/100g
- teneur pondéral en aluminium 1,04 %
- volume poreux V1 représenté par les pores de d ≤ 400 Å 1,01 cm³/g
- volume poreux V2 représenté par les pores 175 Å ≤ d ≤ 275 Å 0,58 cm³/g
- rapport V2/V1 57 %
- pH 6,7
- taille moyenne des particules 270 µm

On soumet la silice A2 au test de désagglomération tel que défini précédemment dans la description.

Après désagglomération aux ultra-sons, elle présente un diamètre médian (⌀₅₀) de 5,3 µm et un facteur de désagglomération aux ultra-sons (F_{D}) de 5,3 ml.

### EXEMPLE 3

Dans un réacteur en acier inoxydable muni d'un système d'agitation par hélices et d'un chauffage par double enveloppe, on introduit 1800 litres d'une suspension réactionnelle S telle que préparée à l'exemple 1.

On y introduit ensuite, pendant 3 minutes et 20 secondes, à un débit de 4,8 I/mn, une solution de sulfate d'aluminium de densité à 20°C égale à 1,2. A l'issue de cette addition, on introduit dans le milieu réactionnel, à un débit de 3,8 I/mn, de la soude concentrée à 18 %, jusqu'à ce que le pH du milieu réactionnel soit égal à 7,7.

On arrête ensuite l'introduction de soude et on procède à un mûrissement du milieu réactionnel pendant 10 minutes à une température de 94 °C.

Puis on introduit, à un débit de 4,7 I/mn, de l'acide sulfurique du type décrit dans l'exemple 1, jusqu'à ce que le pH du milieu réactionnel soit égal à 4,1.

On arrête ensuite l'introduction d'acide et on procède à un mûrissement du milieu réactionnel pendant 5 minutes à une température de 94 °C.

La durée de la réaction (à partir de l'introduction du sulfate d'aluminium) est de 34 minutes.

On obtient ainsi une bouillie de silice précipitée qui est filtrée et lavée au moyen d'un filtre presse.

Le gâteau obtenu est ensuite fluidifié par action mécanique et chimique (ajout simultané d'acide sulfurique et d'une quantité d'aluminate de sodium correspondant à un rapport pondéral Al/SiO₂ de 0,30 %). Après cette opération de délitage, la bouillie résultante, de pH égal à 6,6 et de perte au feu égale à 78,0 % (donc un taux de matière sèche de 22,0 % en poids), est atomisée au moyen d'un atomiseur à buses.

Les caractéristiques de la silice obtenue P1 sous forme de billes sensiblement sphériques (conforme à l'invention) sont alors les suivantes :
- surface spécifique CTAB 161 m²/g
- surface spécifique BET 178 m²/g
- prise d'huile DOP 266 ml/100g
- teneur pondéral en aluminium 0,75 %
- volume poreux V1 représenté par les pores de d ≤ 400 Å 1,08 cm³/g
- volume poreux V2 représenté par les pores 175 Å ≤ d ≤ 275 Å 0,66 cm³/g
- rapport V2/V1 61 %
- pH 7,2
- taille moyenne des particules 260 µm

On soumet la silice P1 au test de désagglomération tel que défini précédemment dans la description.

Après désagglomération aux ultra-sons, elle présente un diamètre médian (⌀₅₀) de 2,5 µm et un facteur de désagglomération aux ultra-sons (F_{D}) de 21 ml.

### EXEMPLE 4

Dans un réacteur en acier inoxydable muni d'un système d'agitation par hélices et d'un chauffage par double enveloppe, on introduit 1670 litres d'une suspension réactionnelle S telle que préparée à l'exemple 1.

On y introduit ensuite, pendant 5 minutes, à un débit de 4,8 l/mn, une solution de sulfate d'aluminium de densité à 20°C égale à 1,2. A l'issue de cette addition, on introduit dans le milieu réactionnel, à un débit de 3,8 l/mn, de la soude concentrée à 18 %, jusqu'à ce que le pH du milieu réactionnel soit égal à 7,8.

On arrête ensuite l'introduction de soude et on procède à un mûrissement du milieu réactionnel pendant 10 minutes à une température de 94 °C.

Puis on introduit, à un débit de 4,7 l/mn, de l'acide sulfurique du type décrit dans l'exemple 1, jusqu'à ce que le pH du milieu réactionnel soit égal à 4,0.

On arrête ensuite l'introduction d'acide et on procède à un mûrissement du milieu réactionnel pendant 5 minutes à une température de 94 °C.

La durée de la réaction (à partir de l'introduction du sulfate d'aluminium) est de 40 minutes.

On obtient ainsi une bouillie de silice précipitée qui est filtrée et lavée au moyen d'un filtre presse.

Le gâteau obtenu est ensuite fluidifié par action mécanique et chimique (ajout simultané d'acide sulfurique et d'une quantité d'aluminate de sodium correspondant à un rapport pondéral Al/SiO₂ de 0,25 %). Après cette opération de délitage, la bouillie résultante, de pH égal à 6,6 et de perte au feu égale à 79,0 % (donc un taux de matière sèche de 21,0 % en poids), est atomisée au moyen d'un atomiseur à buses.

Les caractéristiques de la silice obtenue P2 sous forme de billes sensiblement sphériques (conforme à l'invention) sont alors les suivantes :
- surface spécifique CTAB 156 m²/g
- surface spécifique BET 160 m²/g
- prise d'huile DOP 274 ml/100g
- teneur pondéral en aluminium 1,06 %
- volume poreux V1 représenté par les pores de d ≤ 400 Å 1,04 cm³/g
- volume poreux V2 représenté par les pores 175 Å ≤ d ≤ 275 Å 0,69 cm³/g
- rapport V2/V1 66 %
- pH 7,0
- taille moyenne des particules 250 µm

On soumet la silice P2 au test de désagglomération tel que défini précédemment dans la description.

Après désagglomération aux ultra-sons, elle présente un diamètre médian (⌀₅₀) de 2,4 µm et un facteur de désagglomération aux ultra-sons (F_{D}) de 17 ml.

### EXEMPLE 5

Dans un réacteur en acier inoxydable muni d'un système d'agitation par hélices et d'un chauffage par double enveloppe, on introduit:
- 350 litres d'eau
- 7,5 kg de Na₂SO₄
- 580 litres de silicate de sodium aqueux, présentant un rapport pondéral SiO₂/Na₂O égal à 3,45 et une densité à 20 °C égal à 1,133.

La concentration en silicate exprimée en SiO₂ dans le pied de cuve initial est alors de 84 g/l. Le mélange est alors porté à une température de 82 °C tout en le maintenant sous agitation. On y introduit alors 390 litres d'acide sulfurique dilué de densité à 20 °C égale à 1,050 jusqu'à obtenir dans le milieu réactionnel une valeur de pH (mesurée à sa température) égale à 7,5. La température de la réaction est de 82 °C pendant les 25 premières minutes ; elle est ensuite portée de 82 à 94 °C en 15 minutes environ, puis maintenue à 94 °C jusqu'à la fin de la réaction.

On introduit ensuite conjointement dans le milieu réactionnel 55 litres de silicate de sodium aqueux du type décrit ci-avant et 89 litres d'acide sulfurique, également du type décrit ci-avant, cette introduction simultanée d'acide et de silicate étant réalisée de manière telle que le pH du milieu réactionnel, pendant la période d'introduction, soit constamment égal à 7,5 ± 0,1.

On arrête ensuite l'introduction d'acide et on introduit conjointement dans le milieu réactionnel, pendant 24 minutes, 86 litres de silicate de sodium aqueux du type décrit ci-avant et 33 litres d'une solution de sulfate d'aluminium de densité à 20 °C égale à 1,2.

On arrête ensuite cette addition conjointe et on procède à un mûrissement du milieu réactionnel pendant 10 minutes à 94 °C.

Puis on introduit dans le milieu réactionnel, pendant 7 minutes, de l'acide sulfurique du type décrit ci-avant, de manière à amener le pH du milieu réactionnel à une valeur égale à 5,0. Après cette introduction d'acide, on maintient la bouillie réactionnelle obtenue pendant 5 minutes sous agitation.

La durée totale de la réaction est 109 minutes.

On obtient ainsi une bouillie de silice précipitée qui est filtrée et lavée au moyen d'un filtre presse.

Le gâteau obtenu est ensuite fluidifié par simple action mécanique. Après cette opération de délitage, la bouillie résultante, de pH égal à 6,5 et de perte au feu égale à 78,3 % (donc un taux de matière sèche de 21,7 % en poids), est atomisée au moyen d'un atomiseur à buses.

Les caractéristiques de la silice obtenue P3 sous forme de billes sensiblement sphériques (conforme à l'invention) sont alors les suivantes :
- surface spécifique CTAB 149 m²/g
- surface spécifique BET 178 m²/g
- prise d'huile DOP 260 ml/100g
- teneur pondéral en aluminium 0,96 %
- volume poreux V1 représenté par les pores de d ≤ 400 Å 1,01 cm³/g
- volume poreux V2 représenté par les pores 175 Å ≤ d ≤ 275 Å 0,54 cm³/g
- rapport V2/V1 53 %
- pH 7,1
- taille moyenne des particules 260 µm

On soumet la silice P3 au test de désagglomération tel que défini précédemment dans la description.

Après désagglomération aux ultra-sons, elle présente un diamètre médian (⌀₅₀) de 2,7 µm et un facteur de désagglomération aux ultra-sons (F_{D}) de 17 ml.

### EXEMPLE 6

Dans un réacteur en acier inoxydable muni d'un système d'agitation par hélices et d'un chauffage par double enveloppe, on introduit:
- 350 litres d'eau
- 7,5 kg de Na₂SO₄
- 580 litres de silicate de sodium aqueux, présentant un rapport pondéral SiO₂/Na₂O égal à 3,45 et une densité à 20 °C égal à 1,133.

La concentration en silicate exprimée en SiO₂ dans le pied de cuve initial est alors de 84 g/l. Le mélange est alors porté à une température de 82 °C tout en le maintenant sous agitation. On y introduit alors 390 litres d'acide sulfurique dilué de densité à 20 °C égale à 1,050 jusqu'à obtenir dans le milieu réactionnel une valeur de pH (mesurée à sa température) égale à 7,5. La température de la réaction est de 82 °C pendant les 25 premières minutes ; elle est ensuite portée de 82 à 94 °C en 15 minutes environ, puis maintenue à 94 °C jusqu'à la fin de la réaction.

On introduit ensuite conjointement dans le milieu réactionnel 55 litres de silicate de sodium aqueux du type décrit ci-avant et 89 litres d'acide sulfurique, également du type décrit ci-avant, cette introduction simultanée d'acide et de silicate étant réalisée de manière telle que le pH du milieu réactionnel, pendant la période d'introduction, soit constamment égal à 7,5 ± 0,1.

On arrête ensuite l'introduction d'acide et on introduit conjointement dans le milieu réactionnel, pendant 21 minutes, 50 litres de silicate de sodium aqueux du type décrit ci-avant et 28,5 litres d'une solution de sulfate d'aluminium de densité à 20 °C égale à 1,2.

On arrête ensuite cette addition conjointe et on procède à un mûrissement du milieu réactionnel pendant 10 minutes à 94 °C.

Puis on introduit dans le milieu réactionnel, pendant 7 minutes, de l'acide sulfurique du type décrit ci-avant, de manière à amener le pH du milieu réactionnel à une valeur égale à 5,0. Après cette introduction d'acide, on maintient la bouillie réactionnelle obtenue pendant 5 minutes sous agitation.

La durée totale de la réaction est 109 minutes.

On obtient ainsi une bouillie de silice précipitée qui est filtrée et lavée au moyen d'un filtre presse.

Le gâteau obtenu est ensuite fluidifié par action mécanique et chimique (ajout simultané d'acide sulfurique et d'une quantité d'aluminate de sodium correspondant à un rapport pondéral Al/SiO₂ de 0,40 %). Après cette opération de délitage, la bouillie résultante, de pH égal à 6,5 et de perte au feu égale à 78,3 % (donc un taux de matière sèche de 21,7 % en poids), est atomisée au moyen d'un atomiseur à buses.

Les caractéristiques de la silice obtenue P4 sous forme de billes sensiblement sphériques (conforme à l'invention) sont alors les suivantes :
- surface spécifique CTAB 158 m²/g
- surface spécifique BET 185 m²/g
- prise d'huile DOP 258 ml/100g
- teneur pondéral en aluminium 1,15 %
- volume poreux V1 représenté par les pores de d ≤ 400 Å 1,05 cm³/g
- volume poreux V2 représenté par les pores 175 Å ≤ d ≤ 275 Å 0,59 cm³/g
- rapport V2/V1 56 %
- pH 7,1
- taille moyenne des particules 260 µm

On soumet la silice P4 au test de désagglomération tel que défini précédemment dans la description.

Après désagglomération aux ultra-sons, elle présente un diamètre médian (⌀₅₀) de 2,7 µm et un facteur de désagglomération aux ultra-sons (F_{D}) de 16 ml.

### EXEMPLE 7

Dans un réacteur en acier inoxydable muni d'un système d'agitation par hélices et d'un chauffage par double enveloppe, on introduit:
- 350 litres d'eau
- 7,5 kg de Na₂SO₄
- 580 litres de silicate de sodium aqueux, présentant un rapport pondéral SiO₂/Na₂O égal à 3,45 et une densité à 20 °C égal à 1,133.

La concentration en silicate exprimée en SiO₂ dans le pied de cuve initial est alors de 84 g/l. Le mélange est alors porté à une température de 82 °C tout en le maintenant sous agitation. On y introduit alors 390 litres d'acide sulfurique dilué de densité à 20 °C égale à 1,050 jusqu'à obtenir dans le milieu réactionnel une valeur de pH (mesurée à sa température) égale à 7,5. La température de la réaction est de 82 °C pendant les 25 premières minutes ; elle est ensuite portée de 82 à 94 °C en 15 minutes environ, puis maintenue à 94 °C jusqu'à la fin de la réaction.

On introduit ensuite conjointement dans le milieu réactionnel 55 litres de silicate de sodium aqueux du type décrit ci-avant et 89 litres d'acide sulfurique, également du type décrit ci-avant, cette introduction simultanée d'acide et de silicate étant réalisée de manière telle que le pH du milieu réactionnel, pendant la période d'introduction, soit constamment égal à 7,5 ± 0,1.

On arrête ensuite l'introduction d'acide et on introduit conjointement dans le milieu réactionnel, pendant 15 minutes, 54 litres de silicate de sodium aqueux du type décrit ci-avant et 20,5 litres d'une solution de sulfate d'aluminium de densité à 20 °C égale à 1,2.

On arrête ensuite cette addition conjointe et on procède à un mûrissement du milieu réactionnel pendant 10 minutes à 94 °C.

Puis on introduit dans le milieu réactionnel, pendant 7 minutes, de l'acide sulfurique du type décrit ci-avant, de manière à amener le pH du milieu réactionnel à une valeur égale à 5,0. Après cette introduction d'acide, on maintient la bouillie réactionnelle obtenue pendant 5 minutes sous agitation.

La durée totale de la réaction est 104 minutes.

On obtient ainsi une bouillie de silice précipitée qui est filtrée et lavée au moyen d'un filtre presse.

Le gâteau obtenu est ensuite fluidifié par action mécanique et chimique (ajout simultané d'acide sulfurique et d'une quantité d'aluminate de sodium correspondant à un rapport pondéral Al/SiO₂ de 0,35 %). Après cette opération de délitage, la bouillie résultante, de pH égal à 6,5 et de perte au feu égale à 78,3 % (donc un taux de matière sèche de 21,7 % en poids), est atomisée au moyen d'un atomiseur à buses.

Les caractéristiques de la silice obtenue P5 sous forme de billes sensiblement sphériques (conforme à l'invention) sont alors les suivantes :
- surface spécifique CTAB 166 m²/g
- surface spécifique BET 178 m²/g
- prise d'huile DOP 260 ml/100g
- teneur pondéral en aluminium 0,93 %
- volume poreux V1 representé par les pores de d ≤ 400 Å 1,02 cm³/g
- volume poreux V2 représenté par les pores 175 Å ≤ d ≤ 275 Å 0,61 cm³/g
- rapport V2/V1 60 %
- pH 6,9
- taille moyenne des particules 260 µm

On soumet la silice P5 au test de désagglomération tel que défini précédemment dans la description.

Après désagglomération aux ultra-sons, elle présente un diamètre médian (⌀₅₀) de 2,7 µm et un facteur de désagglomération aux ultra-sons (F_{D}) de 15 ml.

Les caractéristiques des silices préparées dans les exemples 1 à 7, ainsi que celles d'une silice commerciale sous forme de poudre vendue par la Société DEGUSSA, en l'occurrence la poudre ULTRASIL VN3® (référencée A3), sont rassemblées dans le tableau I ci-dessous.

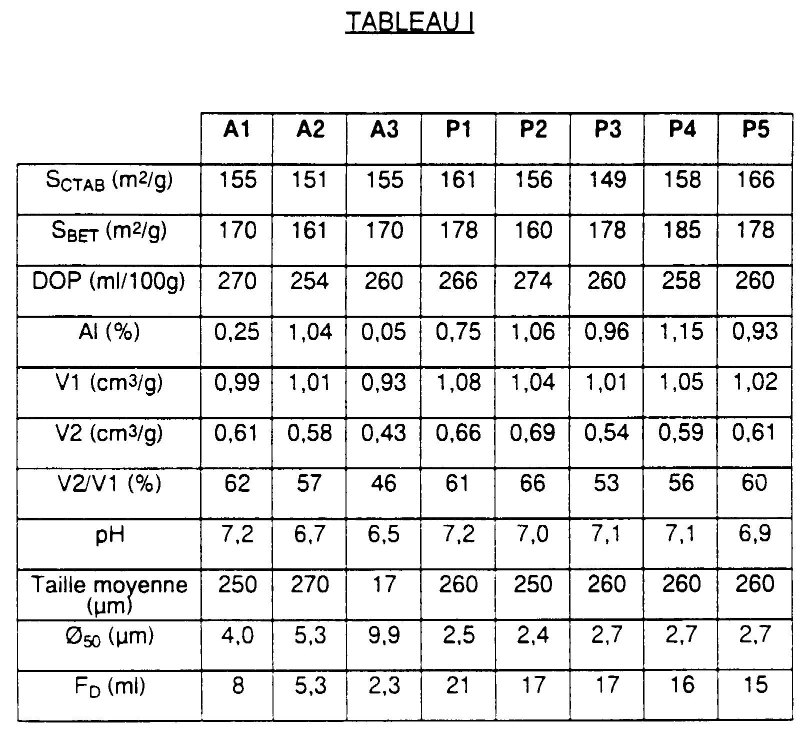

### EXEMPLE 8

Cet exemple illustre l'utilisation et le comportement de silices selon l'invention et de silices non conformes à l'invention dans une formulation pour caoutchouc industriel.

On utilise la formulation suivante (les parties sont exprimées en poids) :
- Caoutchouc Tufdène 2330 ⁽¹⁾ 50
- Caoutchouc B.R. 1220 ⁽²⁾ 25
- Caoutchouc naturel 25
- Silice 51
- ZnO actif ⁽³⁾ 1,81
- Acide stéarique 0,35
- 6PPD ⁽⁴⁾ 1,45
- CBS ⁽⁵⁾ 1,1
- DPG ⁽⁶⁾ 1,45
- Soufre ⁽⁷⁾ 0,9
- Silane X50S ⁽⁸⁾ 8,13

(1) Copolymère styrène butadiène type Tufdène 2330
(2) Polymère butadiène type 1220
(3) Oxyde de zinc qualité caoutchouc
(4) N-(diméthyl-1,3 butyl)-N'-phényl-p-phénylène diamine
(5) N-cyclohexyl 2-benzothiazyl sulfènamide
(6) Diphényl guanidine
(7) Agent vulcanisant
(8) Agent de couplage silice/caoutchouc (produit commercialisé par la Société DEGUSSA)

Les formulations sont préparées de la manière suivante :

Dans un mélangeur interne (type BANBURY), on introduit dans cet ordre et aux temps et températures du mélange indiqués entre parenthèses :
- du Tufdène 2330, du B.R.1220 et du caoutchouc naturel (tₒ)(60 °C)
- le X50S et les 2/3 de la silice (tₒ ± 1 mn)(80 °C)
- le ZnO, l'acide stéarique, le 6PPD et 1/3 de la silice (tₒ ± 2 mn)(100 °C)

La décharge du mélangeur (tombée du mélange) se fait quand la température de la chambre atteint 165 °C (c'est-à-dire, à peu près tₒ ± 5 mn 15 s). Le mélange est introduit sur un mélangeur à cylindres, maintenus à 30 °C, pour y être calandré. Sur ce mélangeur, on introduit le CBS, le DPG et le soufre.

Après homogénéisation et trois passages au fin, le mélange final est calandré sous la forme de feuilles de 2,5 à 3 mm d'épaisseur.

Les résultats des essais sont les suivants :

### 1- Propriétés rhéologiques

Les mesures sont réalisées sur les formulations à l'état cru.

Les résultats sont reportés dans le tableau II ci-dessous. On a indiqué l'appareillage utilisé pour conduire les mesures.

**TABLEAU II**

| | A1 | A3 | P1 | P2 | P3 | P4 | P5 |
|---|---|---|---|---|---|---|---|
| Consistance MOONEY ⁽¹⁾ | 163 | 177 | 142 | 133 | 127 | 143 | 138 |
| Couple mini (In.lb) ⁽²⁾ | 37,3 | 42,5 | 34,6 | 32,7 | 30,8 | 34,1 | 33,8 |

| | | | | | | | |
|---|---|---|---|---|---|---|---|
| (1) Viscosimètre MOONEY MV 2000E (mesure de Mooney Large (1+4) à 100 °C) | | | | | | | |
| (2) Rhéomètre MONSANTO 100 S | | | | | | | |

Les formulations obtenues à partir des silices selon l'invention conduisent aux valeurs les plus faibles.

Ceci traduit une plus grande facilité de mise en oeuvre des mélanges préparés à partir des silices selon l'invention, en particulier au niveau des opérations d'extrusion et de calandrages souvent réalisées lors de la confection de compositions élastomériques (moindre dépense d'énergie pour mettre en oeuvre le mélange, plus grande facilité d'injection lors du mélangeage, moindre gonflement en filière lors de l'extrusion, moindre retrait au calandrage,...).

### 2- Propriétés mécaniques

Les mesures sont réalisées sur les formulations vulcanisées.

La vulcanisation est réalisée en portant les formulations à 150 °C pendant 40 minutes.

Les normes suivantes ont été utilisées :
(i) essais de traction (modules, résistance à la rupture, allongement à la rupture) :
   NFT 46-002 ou ISO 37-1977
(ii) essais de résistance à l'abrasion
   DIN 53-516

Les résultats obtenus sont consignés dans le tableau III ci-dessous.

**TABLEAU III**

| | A1 | A3 | P1 | P2 | P3 | P4 | P5 |
|---|---|---|---|---|---|---|---|
| module 10 % / module 100 % | 0,33 | 0,32 | 0,30 | 0,28 | 0,27 | 0,29 | 0,30 |
| Résistance rupture (MPa) | 20,6 | 17,7 | 20,8 | 20,6 | 20,2 | 20,6 | 21,1 |
| Allongement rupture (%) | 470 | 430 | 510 | 510 | 485 | 495 | 495 |
| Résistance abrasion (mm³) ⁽¹⁾ | 55 | 58 | 48 | 48 | 52 | 47 | 42 |

| | | | | | | | |
|---|---|---|---|---|---|---|---|
| (1) la valeur mesurée est la perte à l'abrasion : plus elle est faible et meilleure est la résistance à l'abrasion. | | | | | | | |

Ces derniers résultats montrent le bon effet de renforcement conféré par les silices selon l'invention.

Ainsi, tout en conduisant à des propriétés rhéologiques nettement meilleures, les silices selon l'invention procurent des propriétés mécaniques au moins sensiblement équivalentes, voire même meilleures que celles obtenues avec les silices de l'art antérieur.

D'une part, les silices selon l'invention conduisent à des rapports module 10 % / module 100 % inférieurs à ceux obtenus avec les silices de l'art antérieur, preuve d'une meilleure dispersion de la silice au sein de la matrice caoutchouc.

D'autre part, le haut pouvoir renforçant des silices selon l'invention est confirmé par les valeurs élevées obtenues pour la résistance à la rupture et l'allongement à la rupture.

Enfin, concernant la résistance à l'abrasion, on note que la perte à l'abrasion est réduite sensiblement (5 à 20 %) par rapport à la silice comparative.

### 3- Propriétés dynamiques

Les mesures sont réalisées sur les formulations vulcanisées.

La vulcanisation est obtenue en portant les formulations à 150 °C pendant 40 minutes. Les résultats (illustrant la tendance à l'échauffement) sont reportés dans le tableau IV ci-dessous (plus les valeurs sont faibles, moindre est la tendance à l'échauffement). On a indiqué l'appareillage utilisé pour conduire les mesures.

**TABLEAU IV**

| | A1 | A3 | P1 | P2 | P3 | P4 | P5 |
|---|---|---|---|---|---|---|---|
| Echauffement interne (°C)⁽¹⁾ | 102 | 101 | 95 | 101 | 95 | 98 | 90 |
| Tangente delta 70 °C ⁽²⁾ | 0,139 | 0,130 | 0,128 | 0,138 | 0,127 | 0,130 | 0,124 |

| | | | | | | | |
|---|---|---|---|---|---|---|---|
| (1) Flexomètre GOODRICH | | | | | | | |
| (2) Visco-élasticimètre INSTRON | | | | | | | |

La tendance à l'échauffement obtenu à partir des silices selon l'invention est assez faible.

## Revendications

1. Procédé de préparation de silice précipitée du type comprenant la réaction d'un silicate avec un agent acidifiant ce par quoi l'on obtient une suspension de silice précipitée, puis la séparation et le séchage de cette suspension, dans lequel on réalise la précipitation de la manière suivante :
(i) on forme un pied de cuve initial comportant un silicate et un électrolyte, la concentration en silicate (exprimée en SiO₂) dans ledit pied de cuve initial étant inférieure à 100 g/l et la concentration en électrolyte dans ledit pied de cuve initial étant inférieure à 17 g/l,
(ii) on ajoute l'agent acidifiant audit pied de cuve jusqu'à l'obtention d'une valeur du pH du milieu réactionnel d'au moins environ 7,
(iii) on ajoute au milieu réactionnel simultanément de l'agent acidifiant et un silicate,
et dans lequel on sèche une suspension présentant un taux de matière sèche d'au plus 24 % en poids,
caractérisé en ce que ledit procédé comprend une des deux opérations (a) ou (b) suivantes :
(a) on ajoute, après l'étape (iii), au milieu réactionnel au moins un composé A de l'aluminium, puis un agent basique, ladite séparation comportant une filtration et un délitage du gâteau issu de cette filtration, ledit délitage étant effectué en présence d'au moins un composé B de l'aluminium,
(b) on ajoute, après l'étape (iii), au milieu réactionnel simultanément un silicate et au moins un composé A de l'aluminium et, lorsque ladite séparation comporte une filtration et un délitage du gâteau issu de cette filtration, le délitage est de préférence effectué en présence d'au moins un composé B de l'aluminium.

2. Procédé selon la revendication 1, comprenant la réaction d'un silicate avec un agent acidifiant ce par quoi l'on obtient une suspension de silice précipitée, puis la séparation et le séchage de cette suspension, dans lequel :
- on réalise la précipitation de la manière suivante :
(i) on forme un pied de cuve initial comportant un silicate et un électrolyte, la concentration en silicate (exprimée en SiO₂) dans ledit pied de cuve initial étant inférieure à 100 g/l et la concentration en électrolyte dans ledit pied de cuve initial étant inférieure à 17 g/l,
(ii) on ajoute l'agent acidifiant audit pied de cuve jusqu'à l'obtention d'une valeur du pH du milieu réactionnel d'au moins environ 7,
(iii) on ajoute au milieu réactionnel simultanément de l'agent acidifiant et un silicate,
- puis, on effectue les étapes successives suivantes :
(iv) on ajoute au milieu réactionnel au moins un composé A de l'aluminium,
(v) on ajoute au milieu réactionnel un agent basique, de préférence jusqu'à l'obtention d'une valeur du pH du milieu réactionnel comprise entre 6,5 et 10, en particulier entre 7,2 et 8,6,
(vi) on ajoute au milieu réactionnel de l'agent acidifiant, de préférence jusqu'à l'obtention d'une valeur du pH du milieu réactionnel comprise entre 3 et 5, en particulier entre 3,4 et 4,5,
- la séparation comporte une filtration et un délitage du gâteau issu de la filtration, le délitage étant effectué en présence d'au moins un composé B de l'aluminium,
- on sèche une suspension présentant un taux de matière sèche d'au plus 24 % en poids.

3. Procédé selon la revendication 2, caractérisé en ce que, entre l'étape (iii) et l'étape (iv), on ajoute au milieu réactionnel de l'agent acidifiant, de préférence jusqu'à l'obtention d'une valeur du pH du milieu réactionnel comprise entre 3 et 6,5.

4. Procédé selon la revendication 1, comprenant la réaction d'un silicate avec un agent acidifiant ce par quoi l'on obtient une suspension de silice précipitée, puis la séparation et le séchage de cette suspension, dans lequel on réalise la précipitation de la manière suivante :
(i) on forme un pied de cuve initial comportant un silicate et un électrolyte, la concentration en silicate (exprimée en SiO₂) dans ledit pied de cuve initial étant inférieure à 100 g/l et la concentration en électrolyte dans ledit pied de cuve initial étant inférieure à 17 g/l,
(ii) on ajoute l'agent acidifiant audit pied de cuve jusqu'à l'obtention d'une valeur du pH du milieu réactionnel d'au moins environ 7,
(iii) on ajoute au milieu réactionnel simultanément de l'agent acidifiant et un silicate,
(iv) on ajoute au milieu réactionnel simultanément un silicate et au moins un composé A de l'aluminium,
et dans lequel on sèche une suspension présentant un taux de matière sèche d'au plus 24 %.

5. Procédé selon la revendication 4, caractérisé en ce que, après l'étape (iv), on ajoute au milieu réactionnel de l'agent acidifiant, de préférence jusqu'à l'obtention d'une valeur du pH du milieu réactionnel comprise entre 3 et 6,5.

6. Procédé selon l'une des revendications 4 et 5, caractérisé en ce que la séparation comporte une filtration et un délitage du gâteau issu de la filtration, le délitage étant effectué en présence d'au moins un composé B de l'aluminium.

7. Procédé selon l'une des revendications 1 à 6, caractérisé en ce que les quantités de composés A et B de l'aluminium utilisées sont telles que la silice précipitée préparée contient au moins 0,45 % en poids d'aluminium.

8. Procédé selon l'une des revendications 1 à 7, caractérisé en ce que le composé A de l'aluminium est un sel organique ou inorganique de l'aluminium, le sel organique étant de préférence choisi parmi les sels d'acides carboxyliques ou polycarboxyliques, et le sel inorganique étant de préférence choisi parmi les halogénures, les oxyhalogénures, les nitrates, les phosphates, les sulfates et les oxysulfates.

9. Procédé selon l'une des revendications 1 à 8, caractérisé en ce que le composé A de l'aluminium est un sulfate d'aluminium.

10. Procédé selon l'une des revendications 1 à 9, caractérisé en ce que le composé B est un aluminate de métal alcalin.

11. Procédé selon l'une des revendications 1 à 10, caractérisé en ce que le composé B de l'aluminium est un aluminate de sodium.

12. Procédé selon l'une des revendications 1 à 11, caractérisé en ce que ladite séparation comprend une filtration effectuée au moyen d'un filtre presse.

13. Procédé selon l'une des revendications 1 à 12, caractérisé en ce que ledit séchage est effectué par atomisation.

14. Procédé selon la revendication 13, caractérisé en ce qu'on sèche une suspension présentant un taux de matière sèche supérieur à 15 % en poids, de préférence supérieur à 17 % en poids.

15. Procédé selon l'une des revendications 12 à 14, caractérisé en ce que ledit séchage est effectué au moyen d'un atomiseur à buses.

16. Procédé selon l'une des revendications 12 à 15, caractérisé en ce que le produit séché est ensuite broyé.

17. Procédé selon la revendication 16, caractérisé en ce que le produit broyé est ensuite aggloméré.

18. Procédé selon la revendication 13, caractérisé en ce qu'on sèche une suspension présentant un taux de matière sèche d'au plus 15 % en poids.

19. Procédé selon la revendication 18, caractérisé en ce que le produit séché est ensuite aggloméré.

20. Silice précipitée caractérisée en ce qu'elle possède :
- une surface spécifique CTAB comprise entre 140 et 200 m²/g,
- une surface spécifique BET comprise entre 140 et 200 m²/g,
- une prise d'huile DOP inférieure à 300 ml/100g,
- un diamètre médian (⌀₅₀), après désagglomération aux ultra-sons, inférieur à 3 µm,
- un facteur de désagglomération aux ultra-sons (F_{D}) supérieur à 10 ml,
- une teneur en aluminium d'au moins 0,45 % en poids.

21. Silice selon la revendication 20, caractérisée en ce qu'elle possède une teneur en aluminium comprise entre 0,50 et 1,50 % en poids.

22. Silice selon l'une des revendications 20 et 21, caractérisée en ce qu'elle possède une teneur en aluminium comprise entre 0,75 et 1,40 % en poids.

23. Silice selon l'une des revendications 20 à 22, caractérisée en ce qu'elle possède un diamètre médian (⌀₅₀), après désagglomération aux ultra-sons, inférieur à 2,8 µm.

24. Silice selon l'une des revendications 20 à 23, caractérisé en ce qu'elle possède un facteur de désagglomération aux ultra-sons (F_{D}) supérieur à 11 ml, en particulier d'au moins 15 ml.

25. Silice selon l'une des revendications 20 à 24, caractérisée en ce qu'elle possède une prise d'huile DOP comprise entre 200 et 295 ml/100g.

26. Silice selon l'une des revendications 20 à 25, caractérisée en ce qu'elle possède une distribution poreuse telle que le volume poreux constitué par les pores dont le diamètre est compris entre 175 et 275 Å représente au moins 50 % du volume poreux constitué par les pores de diamètres inférieurs ou égaux à 400 Å.

27. Silice selon l'une des revendications 20 à 26, caractérisée en ce qu'elle se présente sous forme de billes sensiblement sphériques de taille moyenne d'au moins 80 µm.

28. Silice selon la revendication 27, caractérisée en ce que ladite taille moyenne est d'au moins 100 µm, en particulier d'au moins 150 µm.

29. Silice selon l'une des revendications 20 à 26, caractérisée en ce qu'elle se présente sous forme de poudre de taille moyenne d'au moins 15 µm.

30. Silice selon l'une des revendications 27 à 29, caractérisée en ce qu'elle possède une prise d'huile DOP comprise entre 240 et 290 ml/100g.

31. Silice selon l'une des revendications 20 à 26, caractérisée en ce qu'elle se présente sous forme de granulés de taille d'au moins 1 mm.

32. Silice selon la revendication 31, caractérisée en ce qu'elle possède une prise d'huile DOP comprise entre 200 et 260 ml/100g.

33. Utilisation comme charge renforçante pour élastomères d'une silice selon l'une des revendications 20 à 32.

## Patentansprüche

1. Verfahren zur Herstellung von präzipitiertem Silicamaterial oder Kieselhydrogel des Typs, der die Umsetzung eines Silicats mit einem Säuerungsmittel, worauf man eine Suspension von präzipitiertem Silicamaterial oder Kieselhydrogel erhält, dann die Trennung und die Trocknung dieser Suspension umfaßt, in welchem man die Präzipitation auf die folgende Weise ausführt:
(i) man bildet eine anfängliche Vorlage, die ein Silicat und einen Elektrolyten enthält, wobei die Konzentration an Silicat (ausgedrückt als SiO₂) in der anfänglichen Vorlage unter 100 g/l beträgt und die Konzentration an Elektrolyt in der anfänglichen Vorlage unter 17 g/l beträgt,
(ii) man setzt der Vorlage das Säuerungsmittel bis zur Einstellung eines pH-Werts des Reaktionsmediums von mindestens ungefähr 7 zu,
(iii) man setzt dem Reaktionsmedium gleichzeitig Säuerungsmittel und ein Silicat zu,
und in welchem man eine Suspension, die einen Gehalt an Trockensubstanz von höchstens 24 Gew.-% aufweist, trocknet,
dadurch gekennzeichnet, daß das Verfahren einen der zwei folgenden Verfahrensschritte (a) oder (b) umfaßt:
(a) man setzt nach Schritt (iii) dem Reaktionsmedium mindestens eine Aluminiumverbindung A, dann ein basisches Mittel zu, wobei die Trennung eine Filtration und eine Fragmentierung des aus dieser Filtration stammenden Kuchens umfaßt, wobei diese Fragmentierung in Gegenwart von mindestens einer Aluminiumverbindung B bewirkt wird,
(b) man setzt nach Schritt (iii) dem Reaktionsmedium gleichzeitig ein Silicat und mindestens eine Aluminiumverbindung A zu und, wenn die Trennung eine Filtration und eine Fragmentierung des aus dieser Filtration stammenden Kuchens umfaßt, wird die Fragmentierung vorzugsweise in Gegenwart von mindestens einer Aluminiumverbindung B ausgeführt.

2. Verfahren nach Anspruch 1, welches die Umsetzung eines Silicats mit einem Säuerungsmittel, worauf man eine Suspension von präzipitiertem Silicamaterial oder Kieselhydrogel erhält, dann die Trennung und die Trocknung dieser Suspension umfaßt, in welchem:
- man die Präzipitation auf die folgende Weise ausführt:
(i) man bildet eine anfängliche Vorlage, die ein Silicat und einen Elektrolyten enthält, wobei die Konzentration an Silicat (ausgedrückt als SiO₂) in der anfänglichen Vorlage unter 100 g/l beträgt und die Konzentration an Elektrolyt in der anfänglichen Vorlage unter 17 g/l beträgt,
(ii) man setzt der Vorlage das Säuerungsmittel bis zur Einstellung eines pH-Werts des Reaktionsmediums von mindestens ungefähr 7 zu,
(iii) man setzt dem Reaktionsmedium gleichzeitig Säuerungsmittel und ein Silicat zu,
- man dann die folgenden aufeinanderfolgenden Schritte ausführt:
(iv) man setzt dem Reaktionsmedium mindestens eine Aluminiumverbindung A zu,
(v) man setzt dem Reaktionsmedium ein basisches Mittel, vorzugsweise bis zur Einstellung eines pH-Werts des Reaktionsmediums zwischen 6,5 und 10, insbesondere zwischen 7,2 und 8,6 zu,
(vi) man setzt dem Reaktionsmedium Säuerungsmittel, vorzugsweise bis zur Einstellung eines pH-Werts des Reaktionsmediums zwischen 3 und 5, insbesondere zwischen 3,4 und 4,5 zu,
- die Trennung eine Filtration und eine Fragmentierung des aus der Filtration stammenden Kuchens umfaßt, wobei die Fragmentierung in Gegenwart von mindestens einer Aluminiumverbindung B ausgeführt wird,
- man eine Suspension trocknet, die einen Gehalt an Trockensubstanz von höchstens 24 Gew.-% aufweist.

3. Verfahren nach Anspruch 2, dadurch gekennzeichnet, daß man zwischen Schritt (iii) und Schritt (iv) dem Reaktionsmedium Säuerungsmittel, vorzugsweise bis zur Einstellung eines pH-Werts des Reaktionsmediums zwischen 3 und 6,5 zusetzt.

4. Verfahren nach Anspruch 1, welches die Umsetzung eines Silicats mit einem Säuerungsmittel, worauf man eine Suspension von präzipitiertem Silicamaterial oder Kieselhydrogel erhält, dann die Trennung und die Trocknung dieser Suspension umfaßt, in welchem man die Präzipitation auf die folgende Weise ausführt:
(i) man bildet eine anfängliche Vorlage, die ein Silicat und einen Elektrolyten enthält, wobei die Konzentration an Silicat (ausgedrückt als SiO₂) in der anfänglichen Vorlage unter 100 g/l beträgt und die Konzentration an Elektrolyt in der anfänglichen Vorlage unter 17 g/l beträgt,
(ii) man setzt der Vorlage das Säuerungsmittel bis zur Einstellung eines pH-Werts des Reaktionsmediums von mindestens ungefähr 7 zu,
(iii) man setzt dem Reaktionsmedium gleichzeitig Säuerungsmittel und ein Silicat zu,
(iv) man setzt dem Reaktionsmedium gleichzeitig ein Silicat und mindestens eine Aluminiumverbindung A zu,
und in welchem man eine Suspension, die einen Gehalt an Trockensubstanz von höchstens 24% aufweist, trocknet.

5. Verfahren nach Anspruch 4, dadurch gekennzeichnet, daß man nach Schritt (iv) dem Reaktionsmedium Säuerungsmittel, vorzugsweise bis zur Einstellung eines pH-Werts des Reaktionsmediums zwischen 3 und 6,5 zusetzt.

6. Verfahren nach einem der Ansprüche 4 und 5, dadurch gekennzeichnet, daß die Trennung eine Filtration und eine Fragmentierung des aus der Filtration stammenden Kuchens umfaßt, wobei die Fragmentierung in Gegenwart von mindestens einer Aluminiumverbindung B ausgeführt wird.

7. Verfahren nach einem der Ansprüche 1 bis 6, dadurch gekennzeichnet, daß die verwendeten Mengen an Aluminiumverbindungen A und B dergestalt sind, daß das hergestellte präzipitierte Silicamaterial oder Kieselhydrogel mindestens 0,45 Gew.-% Aluminium enthält.

8. Verfahren nach einem der Ansprüche 1 bis 7, dadurch gekennzeichnet, daß die Aluminiumverbindung A ein organisches oder anorganisches Aluminiumsalz ist, wobei das organische Salz vorzugsweise ausgewählt wird unter den Salzen von Carbonsäuren oder Polycarbonsäuren und das anorganische Salz vorzugsweise ausgewählt wird unter den Halogeniden, Oxyhalogeniden, Nitraten, Phosphaten, Sulfaten und Oxysulfaten.

9. Verfahren nach einem der Ansprüche 1 bis 8, dadurch gekennzeichnet, daß die Aluminiumverbindung A ein Aluminiumsulfat ist.

10. Verfahren nach einem der Ansprüche 1 bis 9, dadurch gekennzeichnet, daß die Verbindung B ein Alkalimetallaluminat ist.

11. Verfahren nach einem der Ansprüche 1 bis 10, dadurch gekennzeichnet, daß die Aluminiumverbindung B ein Natriumaluminat ist.

12. Verfahren nach einem der Ansprüche 1 bis 11, dadurch gekennzeichnet, daß die Trennung eine mittels einer Filterpresse ausgeführte Filtration umfaßt.

13. Verfahren nach einem der Ansprüche 1 bis 12, dadurch gekennzeichnet, daß die Trocknung durch Zerstäubung bewirkt wird.

14. Verfahren nach Anspruch 13, dadurch gekennzeichnet, daß man eine Suspension, die einen Gehalt an Trockensubstanz über 15 Gew.-%, vorzugsweise über 17 Gew.-% aufweist, trocknet.

15. Verfahren nach einem der Ansprüche 12 bis 14, dadurch gekennzeichnet, daß die Trocknung mittels eines Zerstäubers mit Zerstäubungsdüsen bewirkt wird.

16. Verfahren nach einem der Ansprüche 12 bis 15, dadurch gekennzeichnet, daß das getrocknete Produkt danach zerkleinert wird.

17. Verfahren nach Anspruch 16, dadurch gekennzeichnet, daß das zerkleinerte Produkt danach agglomeriert wird.

18. Verfahren nach Anspruch 13, dadurch gekennzeichnet, daß man eine Suspension, die einen Gehalt an Trockensubstanz von höchstens 15 Gew.-% aufweist, trocknet.

19. Verfahren nach Anspruch 18, dadurch gekennzeichnet, daß das getrocknete Produkt danach agglomeriert wird.

20. Präzipitiertes Silicamaterial oder Kieselhydrogel, dadurch gekennzeichnet, daß es aufweist:
- eine spezifische CTAB-Oberfläche zwischen 140 und 200 m²/g,
- eine spezifische BET-Oberfläche zwischen 140 und 200 m²/g,
- eine Ölaufnahme oder Ölzahl DOP unter 300 ml/100 g,
- einen mittleren Durchmesser (⌀₅₀) nach Ultraschall-Desagglomeration unter 3 µm,
- einen Ultraschall-Desagglomerationsfaktor (F_{D}) über 10 ml,
- einen Aluminiumgehalt von mindestens 0,45 Gew.-%.

21. Silicamaterial nach Anspruch 20, dadurch gekennzeichnet, daß es einen Aluminiumgehalt zwischen 0,50 und 1,50 Gew.-% aufweist.

22. Silicamaterial nach einem der Ansprüche 20 und 21, dadurch gekennzeichnet, daß es einen Aluminiumgehalt zwischen 0,75 und 1,40 Gew.-% aufweist.

23. Silicamaterial nach einem der Ansprüche 20 bis 22, dadurch gekennzeichnet, daß es einen mittleren Durchmesser (⌀₅₀) nach Ultraschall-Desagglomeration unter 2,8 um aufweist.

24. Silicamaterial nach einem der Ansprüche 20 bis 23, dadurch gekennzeichnet, daß es einen Ultraschall-Desagglomerationsfaktor (F_{D}) über 11 ml, insbesondere von mindestens 15 ml aufweist.

25. Silicamaterial nach einem der Ansprüche 20 bis 24, dadurch gekennzeichnet, daß es eine Ölaufnahme oder Ölzahl DOP zwischen 200 und 295 ml/100 g aufweist.

26. Silicamaterial nach einem der Ansprüche 20 bis 25, dadurch gekennzeichnet, daß es eine solche Porenverteilung aufweist, daß das aus den Poren, deren Durchmesser zwischen 175 und 275 Å beträgt, gebildete Porenvolumen mindestens 50% des Porenvolumens, das durch die Poren mit Durchmessern unter oder gleich 400 Å gebildet wird, ausmacht.

27. Silicamaterial nach einem der Ansprüche 20 bis 26, dadurch gekennzeichnet, daß es in Form von im wesentlichen kugelförmigen Kügelchen mit einer mittleren Größe von mindestens 80 µm vorliegt.

28. Silicamaterial nach Anspruch 27, dadurch gekennzeichnet, daß die mittlere Größe mindestens 100 µm, insbesondere mindestens 150 µm beträgt.

29. Silicamaterial nach einem der Ansprüche 20 bis 26, dadurch gekennzeichnet, daß es in Form von Pulver mit einer mittleren Größe von mindestens 15 µm vorliegt

30. Silicamaterial nach einem der Ansprüche 27 bis 29, dadurch gekennzeichnet, daß es eine Ölaufnahme oder Ölzahl DOP zwischen 240 und 29C ml/100 g aufweist.

31. Silicamaterial nach einem der Ansprüche 20 bis 26, dadurch gekennzeichnet, daß es in Form von Granulat mit einer Größe von mindestens 1 mm vorliegt.

32. Silicamaterial nach Anspruch 31, dadurch gekennzeichnet, daß es eine Ölaufnahme oder Ölzahl DOP zwischen 200 und 260 ml/100 g aufweist.

33. Verwendung eines Silicamaterials nach einem der Ansprüche 20 bis 32 als Verstärkungsfüllstoff für Elastomere.

## Claims

1. Process for the preparation of precipitated silica of the type including the reaction of a silicate with an acidifying agent whereby a suspension of precipitated silica is obtained, then the separation and the drying of this suspension, in which the precipitation is carried out in the following manner:
(i) an initial base stock comprising a silicate and an electrolyte is formed, the silicate concentration (expressed as SiO₂) in the said initial base stock being lower than 100 g/l and the electrolyte concentration in the said initial base stock being lower than 17 g/l,
(ii) the acidifying agent is added to the said base stock until a pH value of the reaction mixture of at least approximately 7 is obtained,
(iii) acidifying agent and a silicate are added simultaneously to the reaction mixture,
and in which a suspension which has a solids content of not more than 24 % by weight is dried,
characterized in that the said process includes one of the following two operations (a) or (b):
(a) at least one aluminium compound A and then a basic agent, are added to the reaction mixture after stage (iii), the said separation comprising a filtration and disintegration of the cake originating from this filtration, the said disintegration being performed in the presence of at least one aluminium compound B,
(b) a silicate and at least one aluminium compound A are added simultaneously to the reaction mixture after stage (iii) and, when the said separation comprises a filtration and disintegration of the cake originating from this filtration, the disintegration is preferably performed in the presence of at least one aluminium compound B.

2. Process according to claim 1, including the reaction of a silicate with an acidifying agent, whereby a suspension of precipitated silica is obtained, then the separation and the drying of this suspension, in which:
- the precipitation is carried out in the following manner:
(i) an initial base stock comprising a silicate and an electrolyte is formed, the silicate concentration (expressed as SiO₂) in the said initial base stock being lower than 100 g/l and the electrolyte concentration in the said initial base stock being lower than 17 g/l,
(ii) the acidifying agent is added to the said base stock until a pH value of the reaction mixture of at least approximately 7 is obtained,
(iii) acidifying agent and a silicate are added simultaneously to the reaction mixture,
- then the following successive stages are performed:
(iv) at least one aluminium compound A is added to the reaction mixture,
(v) a basic agent is added to the reaction mixture preferably until a pH value of the reaction mixture of between 6.5 and 10, in particular between 7.2 and 8.6, is obtained,
(vi) acidifying agent is added to the reaction mixture, preferably until a pH value of the reaction mixture of between 3 and 5, in particular between 3.4 and 4.5, is obtained,
- the separation comprises a filtration and disintegration of the cake originating from the filtration, the disintegration being performed in the presence of at least one aluminium compound B,
- a suspension exhibiting a solids content of at most 24 % by weight is dried.

3. Process according to claim 2, characterized in that, between stage (iii) and stage (iv), acidifying agent is added to the reaction mixture, preferably until a pH value of the reaction mixture of between 3 and 6.5 is obtained.

4. Process according to claim 1, including the reaction of a silicate with an acidifying agent, whereby a suspension of precipitated silica is obtained, then the separation and the drying of this suspension, in which the precipitation is carried out in the following manner:
(i) an initial base stock is formed comprising a silicate and an electrolyte, the silicate concentration (expressed as SiO₂) in the said initial base stock being lower than 100 g/l and the electrolyte concentration in the said initial base stock being lower than 17 g/l,
(ii) the acidifying agent is added to the said base stock until a pH value of the reaction mixture of at least approximately 7 is obtained,
(iii) acidifying agent and a silicate are added simultaneously to the reaction mixture,
(iv) a silicate and at least one aluminium compound A are added simultaneously to the reaction mixture,
and in which a suspension exhibiting a solids content of at most 24 % is dried.

5. Process according to claim 4, characterized in that, after stage (iv), acidifying agent is added to the reaction mixture preferably until a pH value of the reaction mixture of between 3 and 6.5 is obtained.

6. Process according to either of claims 4 and 5, characterized in that the separation comprises a filtration and disintegration of the cake originating from the filtration, the disintegration being performed in the presence of at least one aluminium compound B.

7. Process according to one of claims 1 to 6, characterized in that the quantities of aluminium compounds A and B which are employed are such that the precipitated silica prepared contains at least 0.45 % by weight of aluminium.

8. Process according to one of claims 1 to 7, characterized in that the aluminium compound A is an organic or inorganic aluminium salt, the organic salt being preferably chosen from the salts of carboxylic or polycarboxylic acids and the inorganic salt being preferably chosen from halides, oxyhalides, nitrates, phosphates, sulphates and oxysulphates.

9. Process according to one of claims 1 to 8, characterized in that the aluminium compound A is an aluminium sulphate.

10. Process according to one of claims 1 to 9, characterized in that the compound B is an alkali metal aluminate.

11. Process according to one of claims 1 to 10, characterized in that the aluminium compound B is a sodium aluminate.

12. Process according to one of claims 1 to 11, characterized in that the said separation includes a filtration performed by means of a filter press.

13. Process according to one of claims 1 to 12, characterized in that the said drying is performed by spraying.

14. Process according to claim 13, characterized in that a suspension exhibiting a solids content higher than 15 % by weight, preferably higher than 17 % by weight is dried.

15. Process according to one of claims 12 to 14, characterized in that the said drying is performed by means of a nozzle dryer.

16. Process according to one of claims 12 to 15, characterized in that the dried product is subsequently milled.

17. Process according to claim 16, characterized in that the milled product is subsequently agglomerated.

18. Process according to claim 13, characterized in that a suspension exhibiting a solids content of at most 15 % by weight is dried.

19. Process according to claim 18, characterized in that the dried product is subsequently agglomerated.

20. Precipitated silica characterized in that it has:
- a CTAB specific surface of between 140 and 200 m²/g,
- a BET specific surface of between 140 and 200 m²/g,
- a DOP oil uptake lower than 300 ml/100 g,
- a median diameter (⌀₅₀), after disintegration with ultrasound, smaller than 3 µm,
- an ultrasonic disintegration factor (F_{D}) higher than 10 ml,
- an aluminium content of at least 0.45 % by weight.

21. Silica according to claim 20, characterized in that it has an aluminium content of between 0.50 and 1.50 % by weight.

22. Silica according to either of claims 20 and 21, characterized in that it has an aluminium content of between 0.75 and 1.40 % by weight.

23. Silica according to one of claims 20 to 22, characterized in that it has a median diameter (⌀₅₀), after disintegration with ultrasound, smaller than 2.8 µm.

24. Silica according to one of claims 20 to 23, characterized in that it has an ultrasonic disintegration factor (F_{D}) higher than 11 ml, in particular of at least 15 ml.

25. Silica according to one of claims 20 to 24, characterized in that it has a DOP oil uptake of between 200 and 295 ml/100 g.

26. Silica according to one of claims 20 to 25, characterized in that it has a pore distribution such that the pore volume consisting of the pores whose diameter is between 175 and 275 Å represents at least 50 % of the pore volume consisting of the pores of diameters smaller than or equal to 400 Å.

27. Silica according to one of claims 20 to 26, characterized in that it is in the form of substantially spherical beads with a mean size of at least 80 µm.

28. Silica according to claim 27, characterized in that the said mean size is at least 100 µm, in particular at least 150 µm.

29. Silica according to one of claims 20 to 26, characterized in that it is in the form of powder with a mean size of at least 15 µm.

30. Silica according to one of claims 27 to 29, characterized in that it has a DOP oil uptake of between 240 and 290 ml/100 g.

31. Silica according to one of claims 20 to 26, characterized in that it is in the form of granules at least 1 mm in size.

32. Silica according to claim 31, characterized in that it has a DOP oil uptake of between 200 and 260 ml/100 g.

33. Use, as reinforcing filler for elastomers, of a silica according to one of claims 20 to 32.
